# EUROPÄISCHE PATENTSCHRIFT

(11) **EP 1 248 010 B1**
(45) Veröffentlichungstag und Bekanntmachung des Hinweises auf die Patenterteilung: **08.08.2007**
(21) Anmeldenummer: 02005714.7
(22) Anmeldetag: 13.03.2002
(51) Int. Cl.: F16D 66/00

(54) **Vorrichtung zur Überwachung der Lebensdauer einer Keramikbremsscheibe**
Device for monitoring the service life of a ceramic brake disc
Dispositif indicateur de la durée de vie d'un disque de frein céramique

(30) Priorität: 04.04.2001 DE 10116662
(43) Veröffentlichungstag der Anmeldung: 09.10.2002
(73) Patentinhaber: Dr.Ing. h.c. F. Porsche Aktiengesellschaft, 70435 Stuttgart (DE)
(72) Erfinder: Martin, Roland, 73432 Aalen (DE)

(56) Entgegenhaltungen:
- EP-A- 0 598 997
- EP-A- 1 124 073
- DE-A- 3 407 716
- DE-A- 3 707 980
- DE-A- 4 316 993
- DE-A- 10 029 238
- FR-A- 2 794 825

## Beschreibung

Die Erfindung bezieht sich auf ein Verfahren zur Erfassung der Lebensdauer von keramischen Bremsscheiben in Fahrzeugen.

Aus der DE 42 26 010 A1 ist ein Verfahren zum Überwachen der Lebensdauer von Fahrzeugbauteilen bekannt, bei welchem die Bauteile in hochbeanspruchten Bereichen elektrische Belastungsaufnehmer aufweisen, so daß deren gewonnenen Meßwerte während des Fahrbetriebes an einer Auswerteeinheit weitergeleitet, gespeichert und dort eine kontinuierliche Bewertung der summierten Werte durchführbar ist. Bei diesem Verfahren werden als Belastungsaufnehmer Dehnmeßstreifen verwendet.

Ferner zeigt die DE 34 07 716 A1 eine Einrichtung zum Messen der Stärke von Verschleißteilen, insbesondere von Teilen einer Bremsanlage wie Bremsbelag, Bremstrommel oder Bremsscheibe. Hierzu wird die tatsächliche Abnutzung bspw. der Beläge durch ein internes Modell simuliert. Zentrale Messgröße ist dabei die Betätigungszeit der Verschleißteile. Zusätzlich können der Bremsdruck und die Relativgeschwindigkeit zwischen den Verschleißteilen berücksichtigt werden.

Das erfindungsgemäße Verfahren hat gegenüber dem aus dem letztgenannten Stand der Technik bekannten Verfahren den Vorteil, daß keine zusätzlichen Belastungsaufnehmer verwendet werden. Vielmehr erfolgt eine Auswertung der bekannten erfassten Betriebsgrößen, die im Steuergerät ohnehin vorhanden sind dahingehend, daß eine kritische Betrachtung jedes einzelnen Bremsvorganges und eine Aufsummierung dieser einzelnen Bremsvorgänge eine genaue Aussage über die bereits erfolgte Abnutzung der Bremsscheibe möglich ist. Aufgrund dieser erfaßten Abnutzung kann dann die Lebensdauer der Bremsscheibe bestimmt und bei Erreichen eines vorgebbaren Referenzwertes eine Anzeige für den Fahrer erfolgen. Diese Anzeige kann optisch oder akustisch im Cockpit des Fahrzeuges vorgesehen sein und beispielsweise auf einen fälligen Werkstattbesuch hinweisen.

Ein Ausführungsbeispiel des erfindungsgemäßen Verfahrens ist in der Figur dargestellt und in der nachfolgenden Beschreibung näher erläutert.

Es zeigen
- Fig. 1: in einem Diagramm den Bremsdruckverlauf über die Fahrgeschwindigkeit,
- Fig. 2: die Verfahrensschritte in einem schematischen Überblick, wobei in einem Zweig 2a eine erste und in einem Zweig 2b eine zweite alternative Möglichkeit der Auswertung gezeigt ist.

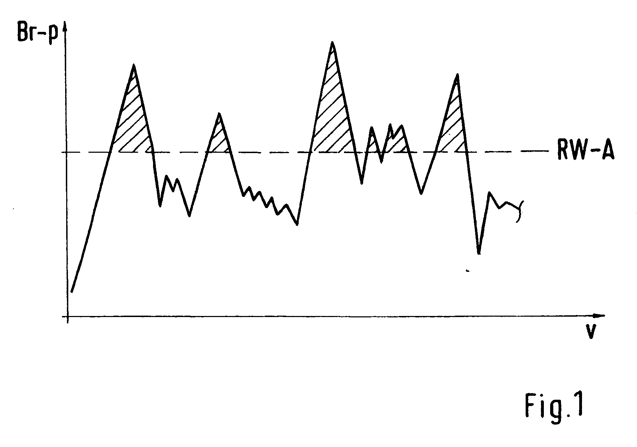

In Fig. 1 ist in einem Diagramm der Bremsdruck über die Fahrgeschwindigkeit dargestellt, so dass auf der Abszisse die Fahrgeschwindigkeit v und auf der Ordinate der Bremsdruck BR-p dargestellt ist. Je nach Fahrgeschwindigkeit v und aktuellen Betriebs- bzw. Fahrbedingungen wird bei jeder Einzelbremsung E-BR ein entsprechender Bremsdruck BR-p aufgebaut, welcher auf die Bremsscheiben einwirkt. In dem Diagramm gemäß Fig. 1 ist gestrichelt ein vorgebbarer Referenzwert RW-A eingetragen, welcher beispielsweise den Größe des Bremsdruckes angibt, ab dem die Belastung für die Bremsscheiben kritisch wird. Die Bereiche, in denen der Bremsdruck BR-p diesen zulässigen Referenzwert RW-A überschreitet, sind in der Fig. 1 schraffiert angegeben.

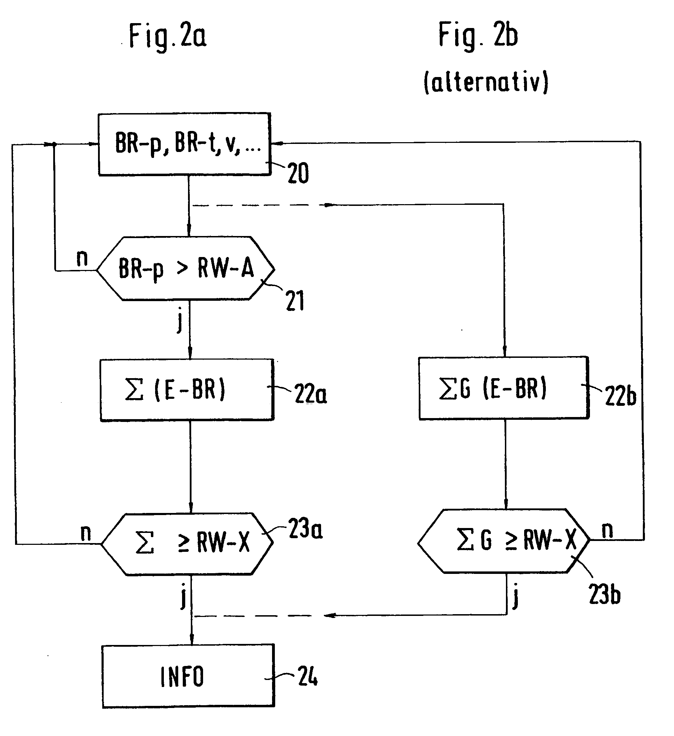

Fig. 2 zeigt schematisch die einzelnen Verfahrensschritte, wobei mit dem Zweig 2a eine erste Möglichkeit zur Auswertung der erfassten Größen erläutert wird.
In einem ersten Arbeitsschritt 20 werden die Fahrgeschwindigkeit v, der Bremsdruck BRp und die Bremszeit BR-t sowie gegebenenfalls weitere Betriebsparameter des Fahrzeugbetriebs erfasst. Der Bremsdruck BR-p jeder Einzelbremsung E-BR wird in der nachfolgenden Abfrage 21 mit dem vorgebbaren kritischen Referenzwert für den Bremsdruck RW-A verglichen. Wurde dieser Referenzwert RW-A nicht überschritten, so springt das Verfahren erneut zum Arbeitsschritt 20 und es werden die nächsten Größen erfasst. Wurde der Referenzwert RW-A überschritten, so werden im Arbeitsschritt 22a die Werte der Einzelbremsungen E-BR aufsummiert. Diese so gebildete Summe Σ aller Einzelbremsungen E-BR, die den Referenzwert RW-A überschreiten, wird in der darauf folgenden Abfrage 23a mit einem weiteren vorgebbaren Referenzwert RW-X verglichen. Dieser vorgebbare Referenzwert RW-X ist der Wert, der eine maximal zulässige Belastung der Bremsscheibe angibt. Hat die Summe der Einzelbremsungen diesen Wert RW-X überschritten, so erfolgt in einem Arbeitsschritt 24 eine Information INFO für den Fahrer in Form einer Anzeige, welche optisch und/oder akustisch im Cockpit des Fahrers angeordnet sein kann. Gleichzeitig kann beispielsweise in einem nicht dargestellten Steuergerät die aktuelle Kilometerzahl, bei welcher der vorgebbare Referenzwert RW-X überschritten wurde, gespeichert werden.

Alternativ zu diesem eben erläuterten Vorgehen zeigt der Zweig 2b eine zweite Möglichkeit der Auswertung. Hierbei wurde darauf verzichtet, jeden erfassten Bremsdruck BR-p mit dem Wert ersten Referenzwert RW-A zu vergleichen. Es werden auch hier in dem Arbeitsschritt 20 die aktuellen Betriebgrößen für den Bremsvorgang erfasst. Jedoch werden dann in einem Arbeitsschritt 22b alle Werte der Einzelzündungen aufsummiert und diese Gesamtsumme ΣG mit dem vorgebbaren Referenzwert RW-X für eine maximal zulässige Belastung der Keramikbremsscheibe verglichen. Wurde dieser Referenzwert RW-x nicht überschritten, so geht das Verfahren zurück an den Anfang des Verfahrens und es wird im Arbeitsschritt 20 der nächste Bremsvorgang erfasst. Wenn der Referenzwert RW-X jedoch überschritten wurde, dann erfolgt wie bereits weiter oben schon erläutert im Arbeitsschritt 25 die Information an den Fahrer.

Der Referenzwerte für dieses Verfahren und damit die Grenzwerte zur Lebensdauerdefinition der Keramikbremsscheibe werden beispielsweise auf dem Prüfstand, aufgrund von Testfahrzeugen ermittelt und können dann in der Applikation noch an spezielle Gegebenheiten angepasst werden.

## Patentansprüche

1. Verfahren zum Überwachen der Lebensdauer einer Keramikbremsscheibe in Kraftfahrzeugen, wobei Brems- und Fahrdynamikeigenschaften, insbesondere Fahrgeschwindigkeit, Bremsdruck und Bremszeit erfaßt werden, wobei eine Aufsummierung des Bremsdruckes von Einzelbremsvorgängen (E-BR) erfolgt und wobei die so gebildete Summe (Σ, ΣG) mit einem vorgebbaren Referenzwert (RW-X) verglichen wird und wobei bei Überschreitung dieses vorgebbaren Referenzwertes (RW-X) eine optische und/oder akustische Anzeige für den Fahrer erfolgt.

2. Verfahren nach Anspruch 1, **dadurch gekennzeichnet, dass** jede Einzelbremsung mit einem vorgebbaren Referenzwert für einen kritischen Bremsdruck (RW-A) verglichen wird, und nur die Einzelbremsungen, die diesen vorgebbaren Referenzwert für einen kritischen Bremsdruck (RW-A) überschreiten, Summenbildung berücksichtigt werden.

3. Verfahren nach Anspruch 1 oder 2, **dadurch gekennzeichnet, dass** die Anzeige eine Information (INFO) über die erreichte maximal zulässige Lebensdauer der Bremsscheibe ist und der Fahrer ein Hinweis auf einen anstehenden Werkstattbesuch erhält.

4. Verfahren nach Anspruch 1, **dadurch gekennzeichnet, daß** der Referenzwert für die maximale Lebensdauer auf einem Prüfstand und/oder durch Fahrtests ermittelt wird.

## Claims

1. A method of monitoring the service life of a ceramic brake disc in motor vehicles, wherein the characteristics of braking and of the dynamics of travel, in particular the speed of travel, the brake pressure and the braking time are detected, wherein a totalling of the brake pressure of individual braking procedures **(E-BR)** is carried out and wherein the sum **(Σ, ΣG)** formed in this way is compared with a pre-settable reference value **(RW-X)** and wherein an optical and/or acoustic display for the driver is given in the event that the said pre-settable reference value **(RW-X)** is exceeded.

2. A method according to Claim 1, **characterized in that** each individual braking action is compared with a pre-settable reference value for a critical brake pressure **(RW-A)**, and only the individual braking actions which exceed the said pre-settable reference value for a critical brake pressure **(RW-A)** are taken into consideration [in the] formation of the total.

3. A method according to Claim 1 or 2, **characterized in that** the display contains information **(INFO)** on the maximum permissible service life of the brake disc reached and the driver receives a message about a visit to the garage which is due.

4. A method according to Claim 1, **characterized in that** the reference value for the maximum service life is determined on a test bench and/or by road tests.

## Revendications

1. Procédé de contrôle de la durée de vie d'un disque de frein en céramique dans des véhicules automobiles, dans lequel les propriétés dynamiques de freinage et de conduite, en particulier la vitesse de déplacement, la pression de freinage et le temps de freinage sont enregistrées, dans lequel une addition de la pression de freinage des processus de freinage individuel (E-BR) est effectuée et la somme (Σ, ΣG) ainsi formée est comparée à une valeur de référence (RW-X) prédéfinissable et dans lequel, en cas de dépassement de cette valeur de référence (RW-X) prédéfinissable, une signalisation optique et/ou acoustique est transmise au conducteur.

2. Procédé selon la revendication 1, **caractérisé en ce que** chaque freinage individuel est comparé à une valeur de référence prédéfinissable pour une pression de freinage critique (RW-A) et seuls les freinages individuels qui dépassent cette valeur de référence prédéfinissable pour une pression de freinage critique (RW-A) sont prises en compte dans la formation de la somme.

3. Procédé selon la revendication 1 ou 2, **caractérisé en ce que** la signalisation est une information (INFO) sur la durée de vie maximale admise atteinte du disque de frein et le conducteur est informé de l'imminence d'une prochaine révision du véhicule.

4. Procédé selon la revendication 1, **caractérisé en ce que** la valeur de référence pour la durée de vie maximale est déterminée sur un banc d'essai et/ou par des tests de conduite.
